# EUROPÄISCHE PATENTSCHRIFT

(11) **EP 0 546 455 B1**
(45) Veröffentlichungstag und Bekanntmachung des Hinweises auf die Patenterteilung: **20.03.1996**
(21) Anmeldenummer: 92120681.9
(22) Anmeldetag: 04.12.1992
(51) Int. Cl.: H02J 13/00, H01H 9/16

(54) **Elektronische Steuereinrichtung zum Schalten mehrerer elektrischer Lasten**
Electronic control unit for switching a number of electrical loads
Unité de commande électronique pour commuter plusieurs charges électriques

(30) Priorität: 10.12.1991 DE 4140587
(43) Veröffentlichungstag der Anmeldung: 16.06.1993
(73) Patentinhaber: Clark Equipment Company, South Bend Indiana 46634 (US)
(72) Erfinder: Wallaert, Johan, B-8310 Assebroek (BE)
(74) Vertreter: Rehberg, Elmar, Dipl.-Ing.

(56) Entgegenhaltungen:
- EP-A- 0 461 432
- WO-A-88/10020
- DE-A- 4 015 271

## Beschreibung

Die Erfindung bezieht sich auf eine elektronische Steuereinrichtung zum Schalten mehrere elektrischer Lasten, insbesondere von Magnetventilen eines Lastschaltgetriebes, in Abhängigkeit von der Stellung verschiedener Informationsschalter mit einer Mehrzahl jeweils zu einer Last führenden Lastleitung und einer eine Mehrzahl elektronischer Schalter aufweisenden Zentraleinheit, wobei die Lastleitungen jeweils über einen elektronischen Schalter mit einer Versorgungsspannung verbindbar sind und wobei die elektronischen Schalter jeweils durch ein logisches Signal schaltbar sind und einen Ausgang für ein logisches Statussignal aufweisen, das bei offenem Schalter anzeigt, ob eine offene Last vorliegt, und bei geschlossenem Schalter anzeigt, ob eine kurzgeschlossene Last vorliegt sowie bei offenem, aber kurzgeschlossenem Schalter unabhängig von der Last das Vorliegen einer offenen Last vorgibt. Um beispielsweise die Magnetventile eines Lastschaltgetriebes in sinnvoller Weise zu schalten, reicht es häufig nicht aus, daß die Steuereinrichtung ausschl. in Abhängigkeit von der Stellung eines Wählhebels die einzelnen Magnetventile betätigt. Vielmehr ist die Berücksichtigung der Stellung verschiedener Informationsschalter, die an unterschiedlichen Stellen außerhalb der elektronischen Steuereinrichtung angeordnet sein können, sinnvoll, wenn nicht gar manchmal absolut notwendig. Die elektronische Steuereinrichtung muß daher in der Lage sein, die Stellung dieser Informationsschalter einzulesen.

Bei einer bekannten Steuereinrichtung der eingangs beschriebenen Art ist die Steuereinrichtung über Informationsleitungen mit den einzelnen Informationsschaltern verbunden. Ein Schließen der Informationsschalter bewirkt die Beaufschlagung der Informationsleitungen mit einer Spannung, die von der Steuereinrichtung registriert wird. Große Probleme treten auf, wenn die elektronische Steuereinrichtung auswechselbar sein soll. In diesem Fall ist bei dem Verbindungsstecker, bzw. den Verbindungssteckern für jeden Informationsschalter mindestens ein Kontakt vorzusehen. Dies spielt insbesondere dann eine Rolle, wenn bei einer vorhandenen elektronischen Steuereinrichtung alle Kontakte belegt sind und die Anzahl der Informationsschalter erhöht werden soll. Hier ist in aller Regel mit großem technischen Aufwand ein neuer Stecker zu konzipieren, bzw. ein zusätzlicher Stecker vorzusehen.

Die bei der hier beschriebenen, bekannten elektronischen Steuereinrichtung verwendeten elektronischen Schalter sind unter anderem aus dem Datenblatt "Smart SIPMOS BTS 412 A" (1988, Siemens, B4, Seiten 1/12 bis 12/12)bekannt. Das Statussignal dieser Schalter erlaubt ein Überwachen der elektrischen Lasten durch die Steuereinrichtung. Insbesondere kann bei offenem Schalter eine offene, d. h. nicht korrekt angeschlossene und bei geschlossenem Schalter eine kurzgeschlossene Last, d. h. eine potentielle Gefahrenquelle für die Versorgungsspannung erkannt werden. Für diese Informationen sind keine zusätzlichen Informationsleitungen zwischen den Lasten und der Steuereinrichtung notwendig. Vielmehr können sie über die entsprechenden Lastleitungen von der Steuereinrichtung eingeholt werden.

Aus der DE-A- 40 15 271 ist eine Schaltungsanordnung zur Abfrage von Schalterstellungen bekannt, wobei eine Mehrzahl von Informationsschaltern vorgesehen ist. Die Informationsschalter sind einerseits mit einem festen Potential und andererseits über eine Informationleitung mit einem Mikrocomputer sowie einem Widerstand verbunden. Die Widerstände ihrerseits sind auf ihrer den Informationsschaltern abgewandten Seite über von dem Mikrocomputer steuerbare Schalter mit einem von dem festen Potential abweichenden Potential verbindbar. Auf diese Weise läßt sich während des Einlesens der Stellungen der Informationsschalter die über die Meßanordnung abfallende Spannung derart erhöhen, daß ein sich vom Rauschen sicher abhebendes Signal vom Mikrocomputer registriert wird. Andererseits kann das Auftreten eines damit verbundenen, vergleichsweise großen Verluststroms für die Zeiträume vermieden werden, in denen die Stellung der Informationsschalter nicht eingelesen wird. Zum Einlesen von einem Schalter ist bei der bekannten Schaltungsanordnung im Mittel mehr als eine von dem Mikrocomputer ausgehende Leitung vorgesehen.

Der Erfindung liegt die Aufgabe zugrunde, eine elektronische Steuereinrichtung der eingangs beschriebenen Art aufzuzeigen, bei der die Stellung einer Vielzahl von Informationsschaltern mit möglichst wenig zusätzlichen Leitungen abfragbar ist.

Erfindungsgemäß wird dies dadurch erreicht, daß mindestens eine Informationsleitung vorgesehen ist, die wie die Lastleitung über einen der elektronischen Schalter mit einer Versorgungsspannung verbunden ist und aus der Zentraleinheit herausführt und daß die Informationsleitung mit mindestens einer Lastleitung (über jeweils einen der Informationsschalter) verbunden ist. Die Stellung des jeweiligen Informationsschalters läßt sich so anhand des Statussignals des der Lastleitung zugeordneten elektronischen Schalters ermitteln. Hierzu ist dieser elektronische Schalter zu öffnen und der der Informationsleitung zugeordnete elektronische Schalter zu schließen. Nun zeigt das Statussignal des der Lastleitung zugeordneten elektronischen Schalters bei geschlossenem Informationsschalter eine offene Last an. Bei offenem Informationsschalter und fehlerfreier Last folgt hingegen keine Fehlermeldung des Statussignals. Die Steuereinrichtung ist somit in der Lage, durch koordiniertes Betätigen der elektronischen Schalter und anschließendes Einlesen der Statussignale die Stellung der Informationsschalter zu ermitteln, ohne daß hierfür insgesamt mehr als eine einzige Informationsleitung nötig wäre. Diese eine Informationsleitung ist bei den bekannten Steuereinrichtungen aus dem Stand der Technik in aller Regel vorhanden, um selbst bei begrenzter Anzahl der Kontakte des Verbindungssteckers, die Stellung wenigstens eines Informationsschalters einlesen zu können. Mit der neuen Steuereinrichtung kann diese Informationsleitung nun zur Überwachung mehrerer Informationsschalter genutzt werden. Als zusätzliches Bauteil ist hierfür ausschl. der der Informationsleitung zugeordnete elektronische Schalter notwendig.

Jeder Informationsschalter kann in Reihe mit einer Diode geschaltet sein. Diese Maßnahme ist notwendig, um die einzelnen Lastleitungen voneinander zu trennen. Ohne die Dioden ist es möglich, daß beim Schließen eines einer Lastleitung zugeordneten elektronischen Schalters, ungewollt verschiedene Lasten aktiviert werden, sofern die entsprechenden Informationsschalter geschlossen sind. Es versteht sich, daß die Dioden so angeordnet sind, daß ihre Durchgangsrichtung mit der Richtung von der Informationsleitung zu der jeweiligen Lastleitung zusammenfällt.

Es können mehrere Informationsleitungen vorgesehen sein, die über verschiedene Informationsschalter mit denselben Lastleitungen verbunden sind. Es ist möglich, über nur eine Lastleitung die Stellung verschiedener Informationsschalter einzulesen. Hierzu sind verschiedene Informationsleitungen, die jeweils über einen elektronischen Schalter mit der Versorgungsspannung verbindbar sind, notwendig. Es versteht sich, daß die den Informationsleitungen zugeordneten elektronischen Schalter nur wechselweise geschlossen werden. Anderenfalls ließe eine von dem Statussignal angezeigte offene Last keine Rückschlüsse auf die Stellung eines bestimmten Informationsschalters zu.

Die Informationsschalter sollten zwei isolierte Anschlüsse aufweisen. Derartige Schalter werden auch als schwebend bezeichnet.

Die mit den Informationsleitungen verbundenen Lastleitungen können zu trägen Lasten führen. Das Einlesen der Stellungen der Informationsschalter ist mit einer derartigen Geschwindigkeit durchführbar, daß bei einer eingeschalteten trägen Last das kurzzeitige Öffnen des zugeordneten elektronischen Schalters nicht oder kaum zu registrieren ist. Die Funktion der Last ist also durch das Überwachen der Informationsschalter nicht beeinträchtigt.

Die Erfindung wird im folgenden anhand von Ausführungsbeispielen näher erläutert und beschrieben. Es zeigen:
- Figur 1: einen elektronischen Schalter,
- Figur 2: das Ersatzschaltbild des elektronischen Schalters gemäß Figur 1,
- Figur 3: die elektronische Steuereinrichtung in einer ersten Ausführungsform,
- Figur 4: Signal- und Statussignalabfolgen bei der Steuereinrichtung gemäß Figur 3 und
- Figur 5: eine zweite Ausführungsform der Steuereinrichtung.

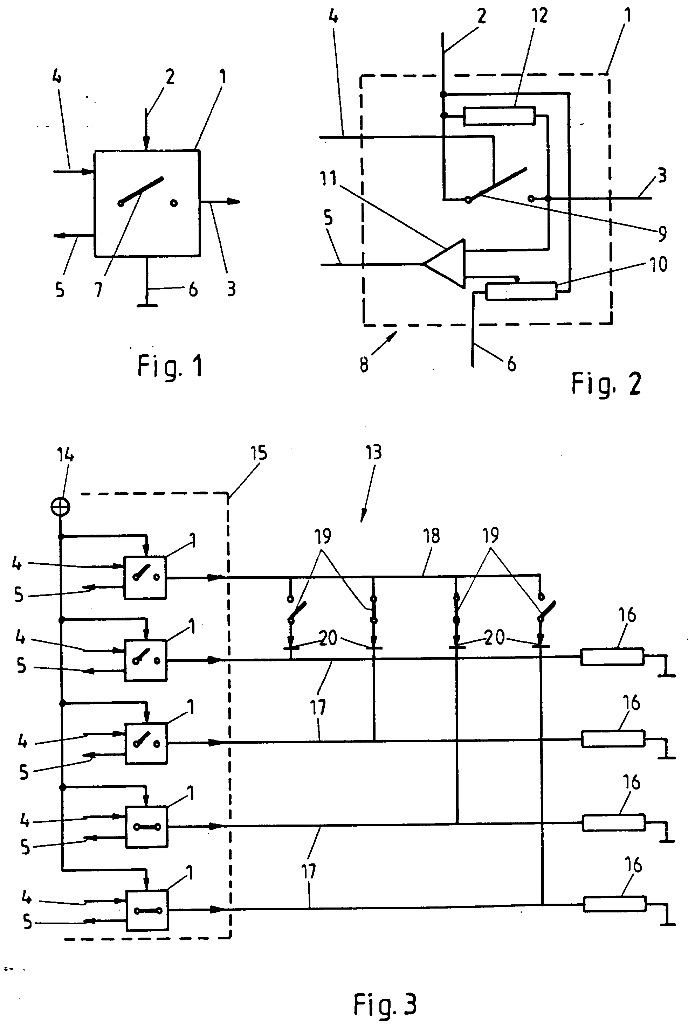

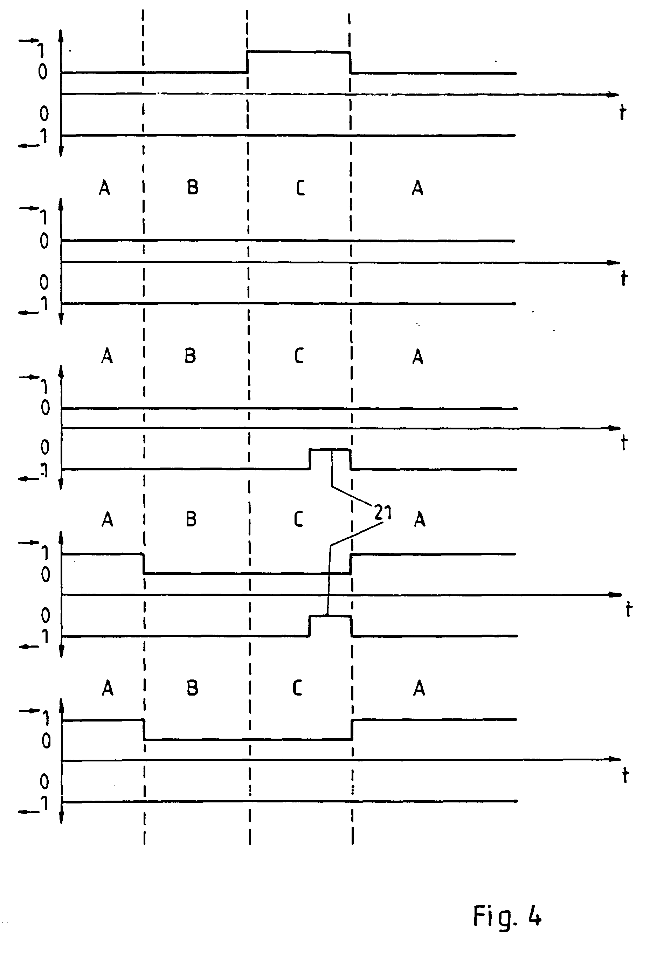

Der in Figur 1 dargestellte elektronische Schalter 1 weist einen Eingang 2 und einen Ausgang 3 für eine Versorgungsspannung auf. Ferner ist ein Eingang 4 zum Anlegen eines logischen Signals zum Schalten des elektronischen Schalters 1 vorgesehen. An einem Ausgang 5 des elektronischen Schalters 1 liegt ein logisches Statussignal an. Außerdem ist für den Schalter 1 eine Erdung 6 vorgesehen. Ein Schaltsymbol 7 zeigt an, ob der elektronische Schalter 1 geschlossen oder offen ist. Das Schaltsymbol 7 ist kein Bestandteil einer tatsächlichen Ausführungsform des elektronischen Schalters 1. Es soll im folgenden jedoch dazu dienen, die Funktionsweise der neuen elektronischen Steuereinrichtung zu erläutern.

Das in Figur 2 dargestellte Ersatzschaltbild 8 für den elektronischen Schalter 1 gemäß Figur 1 verdeutlicht, wie an dem elektronischen Schalter 1 das logische Statussignal für den Ausgang 5 generiert wird. Hierzu sind ein die eigentliche Schaltstelle 9 überbrückender, hochohmiger Widerstand 12, ein Spannungsteiler 10 zwischen dem Eingang 2 der Versorgungsspannung und der Erdung 6 sowie ein Komparator 11 vorgesehen. Der Komparator 11 vergleicht die an dem Ausgang 3 für die Versorgungsspannung anliegende Spannung mit einer ausgangsseitig am Spannungsteiler abgegriffenen Spannung. Bei offenem elektronischen Schalter 1, also nicht überbrückter Schaltstelle 9, erkennt der Komparator 11 ob die Spannung der Versorgungsspannung, die an dem Eingang 2 anliegt, im wesentlichen über der Schaltstelle 9 abfällt. Dies ist dann der Fall, wenn eine den Ausgang 3 mit der Erde verbindende Last einen deutlich geringeren Widerstand aufweist als der Widerstand 12. Ist die Last hingegen nicht korrekt angeschlossen und stellt damit nur eine Verbindung zur Erde mit unendlich hohem Widerstand dar, fällt über der Schaltstelle 9 nur ein geringer Teil der vom Eingang 2 anliegenden Spannung ab. In diesem Fall setzt der Komparator 11 das Statussignal von 1 auf 0 herunter. Hierbei gibt 1 den ordnungsgemäßen Zustand und 0 einen fehlerhaften Zustand der Last an. Bei geschlossenem Schalter 1, d. h. überbrückter Schaltstelle 9 sollte am Ausgang 3 dieselbe Spannung anliegen wie am Eingang 2. Dies ist jedoch nicht der Fall, wenn der Ausgang 3 oder die mit ihm verbundene Last zur Erde kurzgeschlossen ist. In diesem Fall führt der Innenwiderstand des Schalters 1 bzw. der Schaltstelle 9 zu einem Spannungsabfall über der Schaltstelle 9. Dementsprechend setzt der Komparator 11 das am Ausgang 5 anliegende Statussignal dann von 1 auf 0 herunter, wenn die zwischen dem Eingang 2 und dem Ausgang 3 anliegende Spannung einen gewissen Wert überschreitet. Das Schaltbild 8 gemäß Figur 2 ist insofern nicht vollständig, als daß mit dem die Schaltstelle 9 betätigenden Eingang 4 auch ein Inverter verbunden sein müßte, der das Ausgangssignal des Komparators 11 bei geschlossenem Schalter 1 umkehrt und es bei offenem Schalter 1 unbeeinflußt läßt. Der Komparator 11 ist nämlich ausschl. in der Lage, zwei Spannungen miteinander zu vergleichen und anzugeben, ob die erste größer ist als die zweite. Ein Fehler bei der mit dem Ausgang 3 verbundenen Last liegt jedoch einmal dann vor, wenn die über der Schaltstelle 9 abfallende Spannung klein ist, während sie beim anderen Mal auffällig groß ist. Bei offenem Schalter 1 signalisiert ein geringer Spannungsabfall über der Schaltstelle 9 einen Fehler, bei geschlossenem Schalter 1 ist ein geringer Spannungsabfall über der Schaltstelle 9 jedoch der Normalfall.

In jedem Fall läßt das Schaltbild 8 eindeutig erkennen, daß bei einen zum Eingang 2 kurzgeschlossenen Ausgang 3 über der Schaltstelle 9 keine Spannung abfällt und damit bei offenem, aber kurzgeschlossenem Schalter 1 am Ausgang 5 ein eine offene Last suggerierendes Statussignal 0 anliegt.

Die in Figur 3 dargestellte elektronische Steuereinrichtung 13 weist eine Zentraleinheit 15 mit einer Mehrzahl von elektronischen Schaltern 1 auf. Die elektronischen Schalter 1 entsprechen Figur 1, wobei auf die Darstellung der Erdung 6 verzichtet wurde. Die elektronischen Schalter 1 verbinden Lasten 16 über Lastleitungen 17 mit einer Versorgungsspannung 14. Dies gilt mit der Ausnahme eines elektronischen Schalters 1, der mit einer Informationsleitung 18 ausgangsseitig verbunden ist. Die Informationsleitung 18 steht über Informationsschalter 19 jeweils in Verbindung mit einer der Lastleitungen 17. Hierbei sind Dioden 20 mit dem Informationsschalter 19 in Reihe geschaltet, deren Durchlaßrichtung von der Informationsleitung 18 zu den Lastleitungen 17 verläuft. Mit der elektronischen Steuereinrichtung 13 in der dargestellten Form ist es möglich, vier Lasten 16 zu schalten und hierbei die Stellung von vier externen Informationsschaltern 19 zu berücksichtigen. Zu diesem Zweck sind insgesamt nur fünf Leitungen vorgesehen. Dementsprechend wäre für die lösbare Verbindung der Zentraleimeit 13 mit den Lasten 16 und den Informaticnsschaltern 19 nur ein sechspoliger Stecker vorzusehen, wobei der sechste Pol einer gemeinsamen Erdung entspräche.

In Figur 4 ist dargestellt, welche Signale an den Eingängen 4 und den Ausgängen 5 der Schalter 1 gemäß Figur 3 beim Einlesen der Stellung der Informationsschalter 19 anliegen.

Hierbei ist anzumerken, daß die Stellung der Informationsschalter 19 nur dann ermittelt werden kann, wenn sich alle Lasten 16 in ordnungsgemäßem Zustand befinden. Dies läßt sich jedoch beim Einlesen der Stellung der Informationsschalter 19 ohne weiteres überprüfen. Das Einlesen der Stellung der Informationsschalter 19 erfolgt in einem kurzen Zeitintervall B, C, das die normale Steuerung A der Lasten 16 unterbricht. Die für den Abschnitt A in Figur 4 wiedergegebenen Signale entsprechen genau dem Zustand der elektronischen Steuereinrichtung 13 gemäß Figur 3. Dementsprechend liegt an den Eingängen 4 der beiden unteren Schalter ein Signal 1 an, während die Eingänge 4 der anderen elektronischen Schalter 1 von einem Signal 0 beaufschlagt sind. Alle Lasten 16 befinden sich im ordnungsgemäßen Zustand, so daß das Statussignal an allen Ausgängen 5 auf 1 steht. In der ersten Phase B des Zeitintervalls B, C werden nun auch die beiden unteren Schalter 1 geöffnet. Anschließend wird in der zweiten Phase C der oberste elektronische Schalter 1, der mit der Informationsleitung 18 verbunden ist, geschlossen. Hieraus resultiert, da die beiden mittleren Informationsschalter 19 geschlossen sind, bei dem zweiten und dritten elektronischen Schalter 1 von unten, eine Fehlermeldung 21. Für die offenen, äußeren Informationsschalter 19 bleibt dementsprechend das Statussignal am Ausgang 5 des zugeordneten elektronischen Schalters 1 auf 1 stehen. Im Anschluß an die zweite Phase C des Zeitintervalls B, C werden alle Schalter 1 wieder in den Ursprungszustand gemäß Figur 3 überführt. In der Zentraleinheit 15 liegt nunmehr die Information vor, daß die beiden mittleren Informationsschalter 19 geschlossen sind, während die Stellung der beiden äußeren offen ist. Für das Einlesen dieser Information wird etwa 1 msec benötigt. Hierbei ist eine Ansprechzeit des Statussignals auf mögliche Fehler von 300 µ sec zugrundegelegt. Eine Spannungsunterbrechung von 1 msec wird von trägen Lasten 16 in aller Regel nicht registriert. Unter trägen Lasten 16 sind solche Lasten zu verstehen, deren Wirkung nicht schlagartig mit dem Abtrennen der Versorgungsspannung endet. Beispiele hierfür sind Magnetspulen und Glühdrähte. Ein bevorzugtes Anwendungsgebiet elektronischer Steuereinrichtungen stellt das Schalten von Magnetventilen eines Lastschaltgetriebes dar.

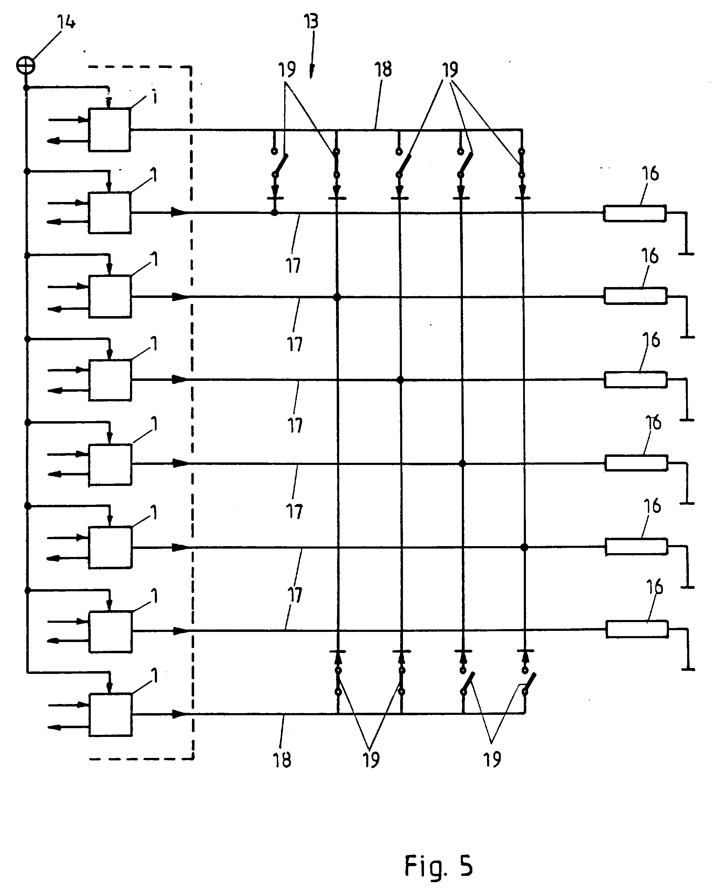

Die in Figur 5 dargestellte Ausführungsform der neuen elektronischen Steuereinrichtung weist neben sechs Lastleitungen 17 zwei Informationsleitungen 18 auf. Hierbei sind die Informationsleitungen 18 über verschiedene Informationsschalter 19 teilweise mit denselben Lastleitungen 17 verbunden. Im vorliegenden Fall können auf diese Weise über insgesamt acht Leitungen sechs Lasten gesteuert und die Stellung von neun Informationsschaltern 19 eingelesen werden. Ohne größeren Aufwand wäre die Berücksichtigung von weiteren vier, also insgesamt zwölf Schaltern möglich. Dabei ist es generell notwendig, daß die den Informationsleitungen 18 zugeordneten elektronischen Schalter 1 nacheinander geschlossen werden. D. h., für jede Informationsleitung 18 und den zugeordneten Schalter 1 wäre eine Phase C gemäß Figur 4 zum Einlesen der Stellung der entsprechenden Informationsschalter 19 vorzusehen. Anderenfalls sind die Änderungen des Statussignals an einem Schalter 1 keinem einzelnen Informationsschalter 19 zuzuordnen. Um eine ordnungsgemäße Funktionsweise der elektronischen Steuereinrichtung 13 zu garantieren, ist darauf zu achten, daß über die Informationsleitungen 18 im Extremfall alle Lasten 16 zu betreiben sind. Anderenfalls wird ein Zusammenbrechen der Versorgungsspannung 14 riskiert. Ferner sollten sämtliche Informationsschalter 19 schwebend, d. h. mit beiden Anschlüssen isoliert ausgebildet sein.

### Bezugszeichenliste:

- 1 =: elektronischer Schalter
- 2 =: Eingang
- 3 =: Ausgang
- 4 =: Eingang
- 5 =: Ausgang
- 6 =: Erdung
- 7 =: Schaltsymbol
- 8 =: Ersatzschaltbild
- 9 =: Schaltstelle
- 10 =: Spannungsteiler
- 11 =: Komparator
- 12 =: Widerstand
- 13 =: elektronische Steuereinrichtung
- 14 =: Versorgungsspannung
- 15 =: Zentraleinheit
- 16 =: Lasten
- 17 =: Lastleitungen
- 18 =: Informationsleitung
- 19 =: Informationsschalter
- 20 =: Diode
- 21 =: Fehlermeldung

## Patentansprüche

1. Elektronische Steuereinrichtung (13) zum Schalten mehrerer elektrischer Lasten (16), insbesondere von Magnetventilen eines Lastschaltgetriebes,
- in Abhängigkeit von der Stellung verschiedener Informationsschalter (19)
- mit einer Mehrzahl jeweils zu einer Last führenden Lastleitungen (17) und
- einer eine Mehrzahl elektronischer Schalter aufweisenden Zentraleinheit (17),
- wobei die Lastleitungen (17) jeweils über einen elektronischen Schalter (1) mit einer Versorgungsspannung verbindbar sind und --
- wobei die elektronischen Schalter jeweils durch ein logisches Signal (4) schaltbar sind
- und einen Ausgang für ein logisches Statussignal (5) aufweisen, das bei offenem Schalter anzeigt, ob eine offene Last vorliegt, und bei geschlossenem Schalter anzeigt, ob eine kurzgeschlossene Last vorliegt, sowie bei offenem, aber kurzgeschlossenem Schalter das Vorliegen einer offenen Last vorgibt,
dadurch gekennzeichnet,
- daß mindestens eine Informationsleitung (18) vorgesehen ist, die wie die Lastleitungen (17) über einen der elektronischen Schalter (1) mit der Versorgungsspannung (14) verbunden ist und aus der Zentraleinheit (15) herausführt
- und daß die Informationsleitung (18) mit mindestens einer Lastleitung (17) über jeweils einen der Informationsschalter (19) verbunden ist.

2. Elektronische Steuereinrichtung nach Anspruch 1, dadurch gekennzeichnet, daß jeder Informationsschalter in Reihe mit einer Diode (20) geschaltet ist.

3. Elektronische Steuereinrichtung nach Anspruch 1, dadurch gekennzeichnet, daß mehrere Informationsleitungen (18) vorgesehen sind, die über verschiedene Informationsschalter mit denselben Lastleitungen verbunden sind.

4. Elektronische Steuereinrichtung nach Anspruch 1, dadurch gekennzeichnet, daß die Informationsschalter zwei isolierte Anschlüsse aufweisen.

5. Elektronische Steuereinrichtung nach Anspruch 1, dadurch gekennzeichnet, daß die mit den Informationsleitungen verbundenen Lastleitungen zu trägen Lasten führen.

## Claims

1. Electronic control unit (13) for switching a number of electrical loads (16), in particular of solenoid valves of a power shift gear,
- depending on the position of various information switches (17),
- having a multitude of load lines (17) each leading to one load, and
- a central unit (15) with a multitude of electronic switches,
- wherein each of the load lines can be connected to a supply voltage via one electronic switch, and
- wherein each of the electronic switches can be switched by a logical signal (4), and
- has an output for a logical status signal (5) which indicates, in case of an open switch, whether an open load is present, and, in case of a closed switch, whether a short-circuited load is present, as well as, in case of an open, but short-circuited switch, pretends the presence of an open load,
characterized in
- that at least one information line (18) is provided which, like the load lines (17), is connected to the supply voltage (14) via one of the electronic switches (1), and leads out from the central unit (15),
- and that the information line (18) is connected to at least one load line (17) via one of the information switches (19).

2. Electronic control unit according to claim 1, characterized in that each information switch is wired in series with a diode (20).

3. Electronic control unit according to claim 1, characterized in that several information lines (18) are provided which are connected to the same load lines via various information switches.

4. Electronic control unit according to claim 1, characterized in that the information switches have two insulated terminals.

5. Electronic control unit according to claim 1, characterized in that the load lines connected to the information lines lead to slow loads.

## Revendications

1. Dispositif de commande électronique (13) pour la commande de plusieurs charges électriques (16), en particulier de soupapes magnétiques d'une transmission de commutation de charge,
- en fonction de la position de différents interrupteurs d'information (19)
- avec une pluralité de lignes de charge (17) menant chacune à une charge et
- une unité centrale (17) comportant une pluralité d'interrupteurs électroniques,
- dans lequel les lignes de charge (17) peuvent être reliées chacune par un interrupteur électronique (1), une tension d'alimentation et
- dans lequel les interrupteurs électroniques peuvent être commandés chacun par un signal logique (4)
- et comportent une sortie pour un signal de statut (5) logique qui, lorsque l'interrupteur est ouvert, indique si on est en présence d'une charge ouverte, et, lorsque l'interrupteur est fermé, indique si on est présence d'une charge court-circuitée, et indique, lorsque l'interrupteur est ouvert mais court-circuité, la présence d'une charge ouverte,
caractérisé
- en ce qu'il est prévu au moins une ligne d'information (18), qui, comme les lignes de charge (17), est reliée à la tension d'alimentation (14), par l'un des interrupteurs électroniques (1) et sort de l'unité centrale (15)
- et en ce que la ligne d'information (18) est reliée à au moins une ligne de charge (17), par l'un des interrupteurs d'information (19).

2. Dispositif de commande électronique selon la revendication 1, caractérisé en ce que chaque interrupteur d'information est monté en série avec une diode (20).

3. Dispositif de commande électronique selon la revendication 1, caractérisé en ce que sont prévues plusieurs lignes d'information (18), qui sont reliées aux mêmes lignes de charge, par différentes interrupteurs d'information.

4. Dispositif de commande électronique selon la revendication 1, caractérisé en ce que les interrupteurs d'information comportent deux branchements isolés.

5. Dispositif de commande électronique selon la revendication 1, caractérisé en ce que les lignes de charge reliées aux lignes d'information mènent à des charges inertes.
